# EUROPEAN PATENT SPECIFICATION

(11) **EP 2 949 632 B1**
(45) Date of publication and mention of the grant of the patent: **11.03.2020**
(21) Application number: 14170529.3
(22) Date of filing: 30.05.2014
(51) Int. Cl.: C04B 18/16, C04B 28/08, B09B 3/00

(54) **Hydraulic composite material based on recycled materials and method for production thereof**
Hydraulischer Verbundwerkstoff auf Basis von wiederverwertbaren Materialien und Verfahren zur Herstellung davon
Matériau composite hydraulique à base des matériaux récyclés et son procédé de production

(43) Date of publication of application: 02.12.2015
(73) Proprietor: Destaclean Oy, 01450 Vantaa (FI)
(72) Inventor: Sarja, Asko, 01450 Vantaa (FI)
(74) Representative: Papula Oy

(56) References cited:
- EP-A2- 2 647 610
- WO-A1-02/34691
- US-A1- 2010 058 957
- US-A1- 2010 242 803

## Description

### Technical Field

The present invention concerns managing material flows of construction industry through recycling.

Especially the invention concerns method for recycling construction and demolition waste to a composite construction material and a construction material obtained by the method.

### Background

The strategic goal of modern societies is use of sustainable technology and minimal use of limited resources, including low energy consumption and materials recycling as focus areas. Buildings and civil infrastructures are consuming highest amount of materials among all production areas. Concrete is in amount the primary construction material, and its production consumes globally a huge amount of natural gravel and sand resources for aggregate, and more than 5 % of all energy used, mainly in production process of the Portland cement. The construction and demolition of old facilities produces a huge amount of waste materials which are currently mainly wasted.

Current recycling of construction and demolition wastes is most usually based on manual sorting of usable materials on each site. This requires a high amount of work and time thus consuming high costs. This is why a dominant part of these wastes are located to dump sites and only a minor part is recycled. The wasted material owns a negative economic and ecological value. Only minor part of the original waste, for example crushed concrete and tiles, steel and other metals is recycled.

Currently automated mechanical sorting processes have been applied in several countries, for example in Germany and the Netherlands. This kind of process includes usually the following phases:
- breaking up the big objects of waste and particles with hammer mills or shredders,
- cleaning dirty and contaminated particles by washing,
- removing the ferromagnetic particles with magnetic separator,
- sorting of materials based on density by air stream, hydrocyclones or centrifuging,
- grading the separated materials on basis of particle size and crushing the large particles again, if necessary.

Automated mechanical waste sorting processes are presented for example in the following patent applications: CN102989747: "Solid construction waste processing and treating system", JP2013086091: "Crushing and sorting technology" and CN102989747: "Method for realizing resourceful treatment of construction waste by adopting solid curing agent technology". The use of waste materials in concrete has been described in the US patent applications US 8308863 and US 20120276310.

The patent application US 8308863 discloses a "Low embodied energy concrete mixture" and a method for making a low embodied energy cementitious mixture by blending a variety of post-consumer wastes, post-industrial wastes, as well as renewable, organic and recyclable materials with Portland cement or a material having similar cementitious properties. The primary materials are recycled concrete, coal-fired fly ash waste, silica fume, post-industrial waste, organic or inorganic waste fibers. Glass, brick, ceramics, ground tires and other waste products, as well as virgin aggregate can also be included in the low embodied energy cementitious mixture.

The patent application US 20120276310 is describes a "Extruded fiber reinforced cementitious products having wood-like properties and ultrahigh strength, and methods for making the same" and a method of manufacturing a cementitious composite including:
(1) mixing an extrudable cementitious composition by first forming a fibrous mixture comprising fibers, water and a rheology modifying agent and then adding hydraulic cement;
(2) extruding the extrudable cementitious composition into a green extrudate, wherein the green extrudate is being form-stable and able to retain a substantially predefined cross-sectional shape;
(3) removing a portion of the water by evaporation to reduce density and increase porosity; and
(4) heating the green extrudate at a temperature from greater than 65° C to less than 99° C. Such a process yields a cementitious composite that is suitable for use as a wood substitute. Particularly, by using higher curing temperatures for preparing the cementitious building products, the building products have a lower bulk density and a higher flexural strength as compared to conventional products. The wood-like building products can be sawed, nailed and screwed like ordinary wood.

Document EP 2 647 610 A2 discloses an inorganic material board, which is a cured mat formed by dehydrating a slurry including 30 to 53 wt% of blast furnace slag, 2 to 5 wt% of gypsum having an average particle size of 200 to 2000 µm, 5 to 11 wt% of alkaline material, 5 to 15 wt% of reinforcing fibers, and 31 to 50 wt% of inorganic admixture with respect to a total solid content, and in which a weight ratio of the blast furnace slag to the gypsum to the alkaline material is 1:0.05 to 0.15:0.15 to 0.35.

Document WO 02/34691 A1 discloses catalyzed hydraulic mixtures containing inert materials which are mainly, preferably fully, constituted by inert materials recovered from building demolition processes, and being ground and granulometrically separated to a range of 0.05-30 mm, and used in an amount from 20% to 60% by volume, blast furnace slags and/or blast furnace ashes, having a granulometry in a range of 0.05-3 mm used in an amount from 10% to 25%, ashes derived from burnt waste materials, for example urban waste materials or the like and comprising both heavy and light ashes with a granulometry in a range of 0.05-15 mm, used in an amount from 10% 0 to 70%, wherein the catalyzers are selected to provide a basic environment with at least a pH 11, thereby the included salts can be recrystallized, with a consequent confinement of the polluting substances included in the slags.

### Summary of Invention

At the moment construction and demolition wastes are recycled in increasing amount, but quite a large amount of materials are still being deposited in waste dumps. This causes loss of resources, increased need of dumping sites and losses in usage of energy.

For the above reasons, it would be beneficial to provide a way to increase the amount of material that can be recycled to usable products in order to increase environmental sustainability of construction industry.

In a first aspect, the invention relates to a method for recycling construction and demolition waste materials to a usable product that is composed of hydraulic composite material.

One embodiment of the invention relates to centralized handling for recycling of construction and building waste materials.

According to other aspects and embodiments of the present invention, the invention provides a method for producing for example:
- products for environmental design, for example stones, plates, steps, blocks and walls for gardens,
- fences and railings,
- foundation blocks of buildings,
- external wall panels ,
- noise barriers on traffic areas,
- terraces of houses and restaurants, and
- acoustic walls, floors and ceilings of noisy industrial production line halls

According to one further aspect of the invention, the invention provides hydraulic composite material the properties of which can be widely varied according to its intended use.

According to further one aspect of the invention, the invention provides a hydraulic composite material that has a very low environmental impact and enables effective use of recycled materials and reduces the amount of energy required for producing construction materials and products.
The invention is based on collecting construction and demolition waste materials unhandled to a processing plant, wherein the materials are sorted and graded, mixing at least part of the sorted and graded materials with hydraulic binding material so that at least 90% of the dry mass of the mixture consists of recycled materials and at most 10% consists of virgin materials from industry, the amount of hydraulic binding material being 20 - 30 % of the dry mass of the mixture and the hydraulic binding material comprises 75 - 100% mass-% of recycled hydraulic industrial byproduct and at least one alkaline activator of at most 5% of waterglass (Na₂O·nSiO₂·nH₂O) of dry mass of the binding material.

The alkaline activator may further comprise:
- at most 25 % of Portland cement of the dry mass of the hydraulic binding material, or
- at most 20% recycled lignosulfates of the dry mass of the binding material.

The recycled materials from construction and demolition sites of the mixture comprise at least one of particles of different sizes and natural fibres (e. g. wood fibres) and for example stone or glass fibres of insulation material, all having the origin in construction or demolition wastes.
According to one embodiment, one or more chemically active or passive additives for the mixture can be chosen from: fly ash from waste burning power plants, waste kaolin clay from paper industry, silica byproduct from aluminum production and waste paper. According to one embodiment of the invention, the product may include reinforcements, preferably chosen form: fiberglass, aramid, carbon fibre, steel as rods, cables or meshes or mixed rods or meshes.
According to one embodiment of the invention, the hardening of the product is accelerated by preheating the constituents and/or the mixture during hardening to a temperature between 40 - 65°C.
The density of the product is 500 - 2000 kg/m³.

According to one embodiment of the invention, the density of the product is between 1300 - 1800 kg/m3.
The embodiments of the invention provide essential benefits.
First, the invention provides an effective way to recycle at least 50% of waste materials originating from building industry and demolition sites. At present, these materials have been sorted on site. Sorting on site requires a lot of workforce and sorting results are not good as materials may get mixed leading to need for further sorting at receiving plant or rejection of the sorted load. The invention provides an increase in recycling rate and closed circle for use of materials as the materials from, for example a demolition site, can be recycled back to construction materials. Further, the invention decreases the use of energy and materials as less virgin materials are needed. Especially important is that the product according to the invention may be produced by using only small amount of Portland cement. This is beneficial as a large amount of energy used in construction industry is need for manufacturing Portland cement. This leads to decrease in carbon dioxide emissions. One important feature of the embodiments of the invention is that it makes it possible to meet increasing governmental rules relating to recycling and deposition of waste material. As burning of waste is becoming less preferred solution in waste management and positioning any organic material in waste dumps is getting banned or expensive, this is a commercially important benefit.
Other objects and features of the invention will become apparent from the following detailed description considered in conjunction with the accompanying drawings. It is to be understood, however, that the drawings are intended solely for purposes of illustration and not as a definition of the limits of the invention, for which reference should be made to the appended claims.

### Description of Drawings

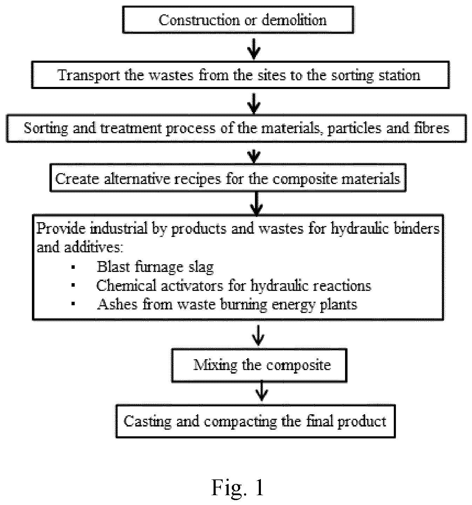

Fig. 1 shows diagram of one embodiment of the method according to the invention.

### Description of embodiments

### Definitions:

Construction and demolition waste is consider to comprise all materials that can be collected from a building site during or after construction thereof or from a demolition site of a building or other large structure such as bridges or other large manmade structures.

Virgin materials from industry are considered to be any materials specifically produced to be used first time to a specific purpose.

Industrial byproducts are materials that result from manufacture of virgin materials and have no further use in the manufacturing process of the virgin material or product.

This invention aims to provide, value added and sustainable ways for the recycling a major part of the construction and demolition wastes in combination of industrial byproducts and wastes. The process begins collection of mixed construction wastes from construction or demolition sites to a waste treatment plant. Suitable fractions of materials are then used to produce a low energy recycling composite materials and products for new constructions, the focus area of this use being the environmental structures and foundations of buildings and structures. The process is described in the following by accompanying drawing (Fig. 1).

The first step in the process is construction or demolition of a structure. The construction of a building or other large structure requires use of supporting structure such as casting moulds, scaffolding, packaging material and such. All of these materials have to be removed from the site and recycled, burned or dumped. Similarly demolition of any kind of large structure, for example a building, bridge or a chimney produces large amount of waste material that has to be handled according to governmental regulations. Sorting of these materials is rather expensive and difficult on site. Therefore the waste materials are collected and transported to a sorting station. At the sorting station the materials are sorted and graded according to the material and particle size. For this, sorting methods such a s sieving, separation by compressed air, flotation, magnetism or robotic handling using machine vision may be used. In the next step, materials are selected for composite materials according to existing recipes or new recipes may be created on basis of the selection of materials currently at hand. In order to produce a hydraulic composite material from the obtained waste, a hydraulic binder is needed binding the components of the composite together. Industrial byproducts can be used for this. These include blast furnace slag, chemical activators for hydraulic reactions, ashes from waste burning energy plants etc. The hydraulic binder material may include small amounts of virgin industrial products such as Portland cement as a reactant. Industrial byproducts may also be used as additives in the hydraulic composite product. After the desired recipes has been chosen or developed and the required materials obtained, the composite can be mixed. The mixing of dry materials may be done first, whereafter water is added in order to accomplish the hydraulic binding reaction. Alternatively the mixing of water and other ingredients may be done simultaneously. After mixing, the composite is cast and compacted to final products. This stage can be done at sorting plant, at a special manufacturing plant or on site where the composite is used.

The above is a general description of one possible manufacturing workflow for producing a hydraulic composite product according to the invention. In the following more details and alternatives are presented.

The treatment of the mixed waste includes mechanical sorting of waste to different usable and unusable materials, crushing and selection of the usable material assortments, grading of these into suitable or desired particle sizes and fibres. The steps that are required for sorting and grading of the material depend on what fractions of materials the original waste includes. For example, construction waste may comprise generally wood based materials and demolished waste may be mainly concrete that included steel as reinforcement. Further common materials found in waste are insulation materials that may provide valuable fibres. The recovered materials are portioned out and mixed according to mix design recipes and mixing methods to produce hydraulic composite materials. Also the hydraulic binding material and the additives can be obtained from industrial by products and wastes. Collecting the unsorted waste and sorting and grading the collected waste on a sorting site makes it possible to recycle high amount (more than 50 mass-%) of the buildings demolition wastes into hydraulic composite products having quite low strength and low density. The particle size distribution and bulk characteristics of the waste can be improved and the influence of harmful agents for the hydraulic hardening processes can be eliminated by sorting and specific treatment methods like agglomeration of the waste particles. Agglomeration has the benefit that larger particles have less dust, exhibit improved flow behavior in mixing, and feature reduced sticking tendencies. Storage, handling, and feeding of materials with large particles are less risky, even for difficult materials.
The hydraulic composite material made of recycled material is obtained by using extremely high share (90-100 mass%) of recycled materials from construction and demolition sites and industrial byproducts. This provides economically added value ecological benefits.
The materials of the mixture of which the products are made may include different size particles and natural fibres (e. g. wood fibres) and for example stone or glass fibres of insulation material, all having the origin in construction or demolition wastes. The wood fibres having thickness of less than 4 mm and the length of 5-50 mm are usable. Natural fibres may be impregnated with suited chemicals, eg . with waterglass (Na2O•nSiO2•nH2O), or mineralized for example with lime slurry. In this way the bond of fibres, weathering durability and fire resistance can be improved.
The hydraulic binding material is herein blast-furnace slag, for example, which is activated with at most 5 mass % of the dry mass of the binding material of waterglass (Na2O•nSiO2•nH2O). 75 - 100% of the binding material may be ground blast furnace slag. The upper limit is defined by the amount of activator used. If the amount of activator is very small, the amount of the slag is practically 100% of the binder and the activator is considered to be only an additive.
As chemically active or passive additives fly ash from waste burning power plants, waste kaolin clay waste from paper industry, waste paper and silica by product from aluminum production may be used.
For improving the workability of the composite mass chemical plasticizing agents may be used.

The waste treatment step may include mechanical waste sorting to different usable and unusable materials, crushing and selection of the usable material assortments and grading of these into suited particle grades and fibres. The materials of the mixture may include different sized particles and natural fibres (e. g. wood fibres) and for example stone or glass fibres of insulation material, all having the origin in construction or demolition wastes. The ground and sorted waste particles may be agglomerated and graded into homogenized and determined particle size grades before mixing the composite mixture. This mixture of the recovered recycled materials is portioned out according to mix design recipes to produce specified alternatives of hydraulic composite material. The properties such as density, compressive and tensile strengths, ductility, sound absorption and easy workability of hardened composite by sawing, drilling and nailing can be controlled through mixture design. The recycled fibres may be impregnated with suitable chemicals, eg . with waterglass (Na2O•nSiO2•nH2O) or mineralized, for example, with lime slurry. Further, it is possible to accelerate the hardening process by preheating the constituents and the mixture during hardening preferably in the temperature 40-65°C. In order to obtain an attractive design, the hardened products can be finished with colouring the mixture or coating or painting the surface with suited pigments, coating agents or paints. The surface of the product may be textured during casting, for example by surface structure of a mould. Suitable manufacturing methods for obtaining the product comprise different casting and processing methods, for example casting and compacting with vibration or dumping, extrusion, pultrusion or spraying.

Specific properties which can be utilised in products made of this hydraulic composite are:
- lightness: density of the product may be varied between 500-2000 kg/m³,most preferably the density is set between 1300-1800 kg/m³, as this range provides reasonable compressive strength,
- effective sound absorption,
- low casting pressure in moulds,
- easy workability of hardened composite in sawing, drilling and nailing,
- ductility and high tensile strength/compressive strength ratio,

This composite material is suited for the use especially for
- environmental construction products, for example as stones, plates, steps, blocks and walls for gardens,
- foundation blocks of buildings,
- noise barriers on traffic areas,
- terraces of houses and restaurants, and
- acoustic walls, floors and ceilings of noisy industrial production line halls.

### Examples

### These experiments are studies of effect of different binders to density and compressive strength, not examples of mixtures according to the invention.

**Table 1. Example of a mix design of the composite.**

| COMPOSITION OF THE COMPOSITE | | |
|---|---|---|
| CONSTITUENT | | Mass % |
| Blastfurnace-slag | KJ 400 | 24 |
| Portland cement | Rapid | 7 |
| Fly ash of wood burning | 0-2 mm | 4 |
| Crushed demolition waste | 0,1-25 mm | 52 |
| Water | 13 | |

| PROPERTIES OF THE COMPOSITE | | |
|---|---|---|
| Density kg/m3 | 1245 | |
| Compressive strength | N/mm2 | 11,9 |

Tested density and strength values of some modifications of the mix design are presented in table 2.

**Table 2. Test results of experimental test pieces at the age of 28 days.**

| Test piece | Activator | Density, kg/m3 | Compressive strength, MPa |
|---|---|---|---|
| 1 | Portland Cement | 1319 | 11,9 |
| 2 | Portland Cement | 1536 | 9,2 |
| 3 | Portland Cement | 1536 | 11,9 |
| 4 | Portland Cement | 1416 | 11,0 |
| 5 | Portland Cement | 1675 | 12,5 |
| 6 | Water glass+fly ash | 1640 | 9,6 |
| 7 | Water glass+fly ash | 1570 | 8,28 |
| 8 | Portland Cement(+wood fibres) | 1416 | 12,3 |
| 9 | Portland Cement(+stone fibres) | 1416 | 12,6 |

As can be seen from the test results, the compressive strength is quite even when the density of the product is above 1300 kg/m³ and even slightly lighter density provides good compressive strength. For practical purposes it may be reasonable to use 1300 kg/m³ as lower limit for density in order to guarantee reasonable compressive strength. However, if lighter weight is desired, it would be recommendable to test the compressive strength of the product. Portland cement seems to provide better compressive strength than waterglass and fly ash. Also, increasing the density seems to increase the compressive strength only slightly, whereby it might be reasonable to limit the density of the products below 1800 kg/m³ if the compressive strength is good enough for the intended use. Adding wood or stone fibres increases the compressive strength. As these materials are available in large quantities in construction and demolition waste, the test result is promising.

It is expressly intended that all combinations of elements and/or method steps which perform substantially the same results are within the scope of the invention. Substitutions of the elements from one described embodiment to another are also fully intended and contemplated. It is also to be understood that the drawings are not necessarily drawn to scale but they are merely conceptual in nature. It is the intention, therefore, to be limited only as indicated by the scope of the claims appended.

## Claims

1. Method for producing hydraulic composite product, comprising steps of:
- preparing a hydraulic composite material by
- collecting unhandled construction and demolition waste materials to a processing plant,
- sorting and grading the collected material to fractions at least according to material,
- mixing at least part of the sorted materials with hydraulic binding material, so that at least 90% of the dry mass of the mixture consists of recycled materials from construction and demolition sites and industrial byproducts and at most 10% consists of virgin materials from industry, the amount of hydraulic binding material being 20 - 30 % of the dry mass of the mixture and the hydraulic binding material comprising 75 - 100% mass-% of recycled hydraulic industrial byproduct and at least one alkaline activator of at most 5% of waterglass (Na2O•nSiO2•nH2O) of the dry mass of the binding material, wherein the recycled materials from constructions or demolition sites of the mixture comprise at least one of: particles of different sizes, natural fibres (e. g. wood fibres), stone or glass fibres of insulation material, all having the origin in construction or demolition wastes,
- hardening the hydraulic composite material,
so that the density of the of the product is set to 500 - 2000 kg/m³.

2. Method according to the claim 1, wherein the hydraulic binding material comprises ground blast furnace slag and the at least one alkaline activator.

3. Method according to any of the claims 1 - 2, wherein one or more chemically active or passive additives are added to the mixture, the additive being chosen from: fly ash from waste burning power plants, waste kaolin clay from paper industry, silica byproduct from aluminum production and waste paper.

4. Method according to any of the claims above, wherein reinforcements are added to the product, the reinforcements being chosen from fiberglass, aramid, carbon fibre, steel as rods, cables or meshes or mixed rods or meshes or combinations thereof.

5. Method according to any of the claims 1 - 4, wherein the hardening of the product is accelerated by preheating the constituents and/or the mixture during hardening to a temperature between 40 - 65°C.

6. Method according to the claim 1 wherein the density of the product is set between 1300 - 1800 kg/m3.

7. Hydraulic composite material, comprising recycled material and hydraulic binding material, wherein at least 90% of the dry mass of the product consists of recycled materials from construction and demolition sites and industrial byproducts and at most 10% consists of virgin materials from industry, the amount of hydraulic binding material being 20 - 30 % of the dry mass of the mixture and the hydraulic binding material comprising 75 - 100% mass-% of recycled hydraulic industrial byproduct and at least one alkaline activator, **characterized in that** the recycled materials from construction or demolition sites of the mixture comprise at least one of: particles of different sizes, natural fibres (e. g. wood fibres), stone or glass fibres of insulation material, all having the origin in construction or demolition wastes so that the density of the hardened product is set to 500 - 2000 kg/m³ and the at least one alkaline activator is at most 5% of waterglass (Na2O•nSiO2•nH2O) of the dry mass of the binding material.

8. Hydraulic composite material according to claim 7, **characterized in that** the hydraulic binding material comprises ground blast furnace slag and the alkaline activator.

9. Hydraulic composite material according to claim 8, **characterized in that** amount of the blast furnace slag is 75 - 100% of hydraulic binding material.

10. Hydraulic composite material according to any of the claims 7 - 9, characterized of one or more chemically active or passive additives being chosen from: fly ash from waste burning power plants, waste kaolin clay from paper industry, silica byproduct from aluminum production and waste paper.

11. Hydraulic composite material according to the claims 7 - 10, **characterized** of reinforcements added to the product, the reinforcements being chosen from: fiberglass,, aramid, carbon fibre, steel as rods, cables or meshes or mixed rods or meshes or combinations thereof.

12. Hydraulic composite product, comprising recycled material and hydraulic binding material, **characterized in that** wherein at least 90% of the dry mass of the product consists of recycled materials from construction and demolition sites and industrial byproducts and at most 10% consists of virgin materials from industry, the amount of hydraulic binding material being 20 - 30 % of the dry mass of the mixture and the hydraulic binding material comprising 75 - 100% mass-% of recycled hydraulic industrial byproduct and at least one alkaline activator, **characterized in that** the recycled materials from construction or demolition sites of the mixture comprise at least one of: particles of different sizes, natural fibres (e. g. wood fibres), stone or glass fibres of insulation material, all having the origin in construction or demolition wastes so that the density of the product is set to 500 - 2000 kg/m3 and the at least one alkaline activator is at most 5% of waterglass (Na2O•nSiO2•nH2O) of the dry mass of the binding material.

13. Hydraulic composite product according to claim 12, **characterized in that** the density of the product is between 1300 - 1800 kg/m³.

14. Hydraulic composite product according to claim 12, the product being any of the following:
• environmental product, such as stone, plate, step, block or wall for gardens,
• fence and railing,
• foundation block for buildings,
• external wall panel,
• noise barrier on traffic areas,
• terrace for houses and restaurants, or
• acoustic wall, floor or ceiling for noisy industrial production line halls.

## Patentansprüche

1. Verfahren zur Herstellung eines hydraulischen Verbundprodukts, umfassend die Schritte:
- Herstellen eines hydraulischen Verbundwerkstoffs durch
- Sammeln von unbehandelten Bau- und Abbruchabfallmaterialien zu bzw. an einem Verarbeitungswerk,
- Sortieren und Einstufen des gesammelten Materials in Fraktionen, zumindest nach Material,
- Mischen mindestens eines Teils der sortierten Materialien mit hydraulischem Bindematerial, so dass mindestens 90 % der Trockenmasse der Mischung aus Recyclingmaterialien von Bau- und Abbruchstandorten und industriellen Nebenprodukten und höchstens 10 % aus Neuware aus der Industrie bestehen, wobei die Menge des hydraulischen Bindematerials 20 - 30 % der Trockenmasse des Gemisches beträgt und das hydraulische Bindematerial 75 - 100 Masse-% recyceltes hydraulisches industrielles Nebenprodukt und mindestens einen alkalischen Aktivator von höchstens 5 % Wasserglas (Na2O^{∗}nSiO2^{∗}nH2O) der Trockenmasse des Bindematerials umfasst, wobei die recycelten Materialien aus Bau- oder Abbruchstandorten des Gemisches Partikel unterschiedlicher Größe und/oder Naturfasern (z. B. Holzfasern), und/oder Stein- oder Glasfasern aus Isoliermaterial aufweisen, die alle ihren Ursprung in Bau- oder Abbruchabfallmaterialien haben,
- Härten des hydraulischen Verbundwerkstoffs, so dass die Dichte des Produkts auf 500 - 2000 kg/m³ eingestellt ist bzw. wird.

2. Verfahren nach Anspruch 1, wobei das hydraulische Bindematerial gemahlene Hochofenschlacke und den mindestens einen alkalischen Aktivator umfasst.

3. Verfahren nach einem der Ansprüche 1 - 2, wobei ein oder mehrere chemisch aktive oder passive Additive der Mischung zugegeben werden, wobei das Additiv ausgewählt wird aus: Flugasche aus Müllverbrennungsanlagen, Kaolinabfall aus der Papierindustrie, Silica-Nebenprodukt aus der Aluminiumherstellung und Altpapier.

4. Verfahren nach einem der obigen Ansprüche, wobei dem Produkt Verstärkungen hinzugefügt werden, wobei die Verstärkungen ausgewählt werden aus Glasfaser, Aramid, Kohlefaser, Stahl als Stäbe, Kabel oder Gewebe oder gemischte Stäbe oder Gewebe oder Kombinationen davon.

5. Verfahren nach einem der Ansprüche 1 - 4, wobei das Härten des Produkts beschleunigt wird, indem die Bestandteile und/oder das Gemisch während des Härtens auf eine Temperatur zwischen 40 - 65°C vorgewärmt werden.

6. Verfahren nach Anspruch 1, wobei die Dichte des Produkts zwischen 1300 - 1800 kg/m³ eingestellt wird.

7. Hydraulisches Verbundmaterial, umfassend Recyclingmaterial und hydraulisches Bindematerial, wobei mindestens 90 % der Trockenmasse des Produkts aus Recyclingmaterialien von Bau- und Abbruchstandorten und industriellen Nebenprodukten und höchstens 10 % aus Neuware aus der Industrie bestehen, wobei die Menge des hydraulischen Bindematerials 20 - 30 % der Trockenmasse des Gemischs beträgt und das hydraulische Bindematerial 75 - 100 % Masse-% des recycelten hydraulischen industriellen Nebenprodukts und mindestens einen alkalischen Aktivator umfasst, **dadurch gekennzeichnet, dass** die recycelten Materialien von Bau- oder Abbruchstellen des Gemischs Partikel unterschiedlicher Größe und/oder, Naturfasern (z. B. g. Holzfasern und/oder, Stein- oder Glasfasern aus Isoliermaterial aufweisen, die alle ihren Ursprung in Bau- oder Abbruchabfallmaterialien haben, so dass die Dichte des gehärteten Produkts auf 500 - 2000 kg/m' eingestellt ist und der mindestens eine alkalische Aktivator höchstens 5% Wasserglas (Na2O^{∗}nSiO2^{∗}nH2O) der Trockenmasse des Bindematerials beträgt.

8. Hydraulisches Verbundmaterial nach Anspruch 7, **dadurch gekennzeichnet, dass** das hydraulische Bindematerial gemahlene Hochofenschlacke und den alkalischen Aktivator umfasst.

9. Hydraulisches Verbundmaterial nach Anspruch 8, **dadurch gekennzeichnet, dass** die Menge der Hochofenschlacke 75 - 100% des hydraulischen Bindematerials beträgt.

10. Hydraulisches Verbundmaterial nach einem der Ansprüche 7-9, **gekennzeichnet durch** ein oder mehrere chemisch aktive oder passive Additive, ausgewählt aus: Flugasche aus Müllverbrennungsanlagen, Kaolinabfall aus der Papierindustrie, Silica-Nebenprodukt aus der Aluminiumherstellung und Altpapier.

11. Hydraulisches Verbundmaterial nach den Ansprüchen 7-10, **gekennzeichnet durch** Verstärkungen, die dem Produkt hinzugefügt sind, wobei die Verstärkungen ausgewählt sind aus: Glasfaser, Aramid, Kohlefaser, Stahl als Stäbe, Kabel oder Gewebe oder gemischte Stäbe oder Gewebe oder Kombinationen davon.

12. Hydraulisches Verbundprodukt, umfassend Recyclingmaterial und hydraulisches Bindematerial, **dadurch gekennzeichnet, dass** mindestens 90 % der Trockenmasse des Produkts aus Recyclingmaterialien von Bau- und Abbruchstandorten und industriellen Nebenprodukten und höchstens 10 % aus Neumaterialien aus der Industrie bestehen, wobei die Menge des hydraulischen Bindematerials 20 - 30 % der Trockenmasse des Gemisches beträgt und das hydraulische Bindematerial 75 - 100 % Massen-% des recycelten hydraulischen industriellen Nebenprodukts und mindestens einen alkalischen Aktivator umfasst, **dadurch gekennzeichnet, dass** die recycelten Materialien von Bau- oder Abbruchstandorten des Gemisches Partikel unterschiedlicher Größe und/oder Naturfasern (ca. g. Holzfasern) und/oder Stein- oder Glasfasern aus Isoliermaterial aufweisen, die alle ihren Ursprung in Bau- oder Abbruchabfallmaterialien haben, so dass die Dichte des Produkts auf 500 - 2000 kg/m3 eingestellt ist und der mindestens eine alkalische Aktivator höchstens 5% Wasserglas (Na2O^{∗}nSiO2^{∗}nH2O) der Trockenmasse des Bindematerials beträgt.

13. Hydraulisches Verbundprodukt nach Anspruch 12, **dadurch gekennzeichnet, dass** die Dichte des Produkts zwischen 1300 - 1800 kg/m³ liegt.

14. Hydraulisches Verbundprodukt nach Anspruch 12, wobei das Produkt eines der folgenden ist:
• Umweltprodukt, wie Stein, Platte, Stufe, Block oder Wand für Gärten,
• Zaun und Geländer,
• Fundamentblock für Gebäude,
• Außenwandpaneel,
• Lärmschutzwand auf Verkehrsflächen,
• Terrasse für Häuser und Restaurants, oder
• Akustik-Wand, -Boden oder -Decke für laute Produktionshallen in der Industrie.

## Revendications

1. Procédé de production d'un matériau composite hydraulique, comprenant les étapes suivantes :
- préparation d'un matériau composite hydraulique par
- collecte de déchets de construction et de démolition non gérés vers une usine de traitement,
- tri et classement des matériaux collectés en fractions au moins en fonction du matériau,
- mélange d'au moins une partie des matériaux triés avec un liant hydraulique, de sorte qu'au moins 90 % de la masse sèche du mélange se composent de matériaux recyclés provenant de chantiers de construction et de démolition et de sous-produits industriels et qu'au plus 10 % se composent de matériaux vierges provenant de l'industrie, la quantité de liant hydraulique représentant 20 à 30 % de la masse sèche du mélange et le liant comprenant 75 à 100 % en masse de sous-produit industriel hydraulique recyclé et au moins un activateur alcalin d'au plus 5 % de verre soluble (Na₂O-nSiO₂-nH₂O) de la masse sèche du liant, dans lequel les matériaux recyclés provenant de chantiers de construction ou de démolition du mélange comprennent au moins un élément parmi : des particules de différentes tailles, des fibres naturelles (par exemple, des fibres de bois), de la pierre ou des fibres de verre de matériau d'isolation, toutes ayant pour origine des déchets de construction ou de démolition,
- durcissement du matériau composite hydraulique,
de sorte que la masse volumique du produit est fixée de 500 à 2000 kg/m³.

2. Procédé selon la revendication 1, dans lequel le liant hydraulique comprend du laitier de haut-fourneau broyé et l'au moins un activateur alcalin.

3. Procédé selon l'une quelconque des revendications 1 et 2, dans lequel un ou plusieurs additifs chimiquement actifs ou passifs sont ajoutés au mélange, l'additif étant choisi parmi : des cendres volantes provenant de centrales électriques d'incinération de déchets, de l'argile kaolin usée provenant de l'industrie papetière, un sous-produit de silice provenant de la production d'aluminium et des déchets de papier.

4. Procédé selon l'une quelconque des revendications ci-dessus, dans lequel des renforts sont ajoutés au produit, les renforts étant choisis parmi de la fibre de verre, de l'aramide, de la fibre de carbone, de l'acier sous forme de barres, des câbles ou des treillis ou des barres ou des treillis mélangés ou des combinaisons de ceux-ci.

5. Procédé selon l'une quelconque des revendications 1 à 4, dans lequel le durcissement du produit est accéléré par préchauffage des éléments constitutifs et/ou du mélange durant le durcissement à une température comprise entre 40 et 65 °C.

6. Procédé selon la revendication 1, dans lequel la masse volumique du produit est fixée entre 1300 et 1800 kg/m³.

7. Matériau composite hydraulique, comprenant un matériau recyclé et un liant hydraulique, dans lequel au moins 90 % de la masse sèche du produit se composent de matériaux recyclés provenant de chantiers de construction et de démolition et de sous-produits industriels et au plus 10 % se composent de matériaux vierges provenant de l'industrie, la quantité de liant hydraulique représentant 20 à 30 % de la masse sèche du mélange et le liant hydraulique comprenant 75 à 100 % en masse de sous-produit industriel hydraulique recyclé et au moins un activateur alcalin, **caractérisé en ce que** les matériaux recyclés provenant de chantiers de construction ou de démolition du mélange comprennent au moins un élément parmi : des particules de différentes tailles, des fibres naturelles (par exemple, des fibres de bois), de la pierre ou des fibres de verre de matériau d'isolation, toutes ayant pour origine des déchets de construction ou de démolition de sorte que la masse volumique du produit durci est fixée de 500 à 2000 kg/m³ et l'au moins un activateur alcalin représente au plus 5 % de verre soluble (Na₂O-nSiO₂-nH₂O) de la masse sèche du liant.

8. Matériau composite hydraulique selon la revendication 7, **caractérisé en ce que** le liant hydraulique comprend du laitier de haut-fourneau broyé et l'activateur alcalin.

9. Matériau composite hydraulique selon la revendication 8, **caractérisé en ce que** la quantité de laitier de haut-fourneau représente 75 à 100 % du liant hydraulique.

10. Matériau composite hydraulique selon l'une quelconque des revendications 7 à 9, **caractérisé en ce qu'**un ou plusieurs additifs chimiquement actifs ou passifs sont choisis parmi : des cendres volantes provenant de centrales électriques d'incinération de déchets, de l'argile kaolin usée provenant de l'industrie papetière, un sous-produit de silice provenant de la production d'aluminium et des déchets de papier.

11. Matériau composite hydraulique selon les revendications 7 à 10, **caractérisé en ce que** des renforts sont ajoutés au produit, les renforts étant choisis parmi : de la fibre de verre, de l'aramide, de la fibre de carbone, de l'acier sous forme de barres, des câbles ou des treillis ou des barres ou des treillis mélangés ou des combinaisons de ceux-ci.

12. Produit composite hydraulique, comprenant un matériau recyclé et un liant hydraulique, **caractérisé en ce qu'**au moins 90 % de la masse sèche du produit se composent de matériaux recyclés provenant de chantiers de construction et de démolition et de sous-produits industriels et au plus 10 % se composent de matériaux vierges provenant de l'industrie, la quantité de liant hydraulique représentant 20 à 30 % de la masse sèche du mélange et le liant hydraulique comprenant 75 à 100 % en masse de sous-produit industriel hydraulique recyclé et au moins un activateur alcalin, **caractérisé en ce que** les matériaux recyclés provenant de chantiers de construction ou de démolition du mélange comprennent au moins un élément parmi : des particules de différentes tailles, des fibres naturelles (par exemple, des fibres de bois), de la pierre ou des fibres de verre de matériau d'isolation, toutes ayant pour origine des déchets de construction ou de démolition de sorte que la masse volumique du produit est fixée de 500 à 2000 kg/m³ et que l'au moins un activateur alcalin représente au plus 5 % de verre soluble (Na₂O-nSiO₂-nH₂O) de la masse sèche du liant.

13. Produit composite hydraulique selon la revendication 12, **caractérisé en ce que** la masse volumique du produit est comprise entre 1300 et 1800 kg/m³.

14. Produit composite hydraulique selon la revendication 12, le produit étant l'un quelconque des produits suivants :
• un produit d'environnement, tel qu'une pierre, une plaque, une marche, un parpaing ou un muret de jardin,
• une clôture et une balustrade,
• un bloc de fondation de bâtiments,
• un panneau de paroi externe,
• une barrière anti-bruit dans des zones de circulation,
• une terrasse pour maisons ou restaurants, ou
• un mur, un plancher ou un plafond acoustique pour halls de ligne de production industrielle bruyants.
